# EUROPÄISCHE PATENTANMELDUNG

(11) **EP 3 085 990 A1**
(43) Veröffentlichungstag der Anmeldung: **26.10.2016**
(21) Anmeldenummer: 16163115.5
(22) Anmeldetag: 31.03.2016
(51) Int. Cl.: F16F 15/14

(54) **FLIEHKRAFTPENDEL**

(30) Priorität: 23.04.2015 DE 102015207410; 26.05.2015 DE 102015209623
(71) Anmelder: Schaeffler Technologies AG & Co. KG, 91074 Herzogenaurach (DE)
(72) Erfinder: Neumaier, Frank, 77796 Mühlenbach (DE); Krause, Thorsten, 77815 Bühl (DE)

(57) **Zusammenfassung**

Die Erfindung betrifft ein Fliehkraftpendel (1) mit einem um eine Drehachse (d) verdrehbaren Trägerteil (2) und an diesem mittels Pendellagern (3) über den Umfang verteilt angeordneten Pendelmassen (4), wobei die Pendelmassen (4) gegenüber dem Trägerteil (2) mittels der aus jeweils auf Laufbahnen (6, 7) des Trägerteils (2) und der Pendelmassen (4) abwälzenden Pendelrollen (5) gebildeten Pendellager (3) im Fliehkraftfeld des um die Drehachse (d) drehenden Trägerteils (2) um eine Nulllage (10) mit einem vorgegebenen Schwingwinkel (α) pendelfähig und während einer Pendelbewegung um deren Schwerpunkt (S) teilweise verdrehbar aufgehängt sind und wobei die Pendel- und Rotationsbewegung der Pendelmassen (4) durch entsprechende Ausbildung der Laufbahnen (6, 7) vorgegeben ist. Um einen Einfluss auf die Pendelmassen (4) ausschließlich bei asynchroner Bewegung dieser vorzunehmen, sind die Laufbahnen (6, 7) derart ausgebildet, dass an in Umfangsrichtung benachbarten Pendelmassen (4) angeordnete Lagerstellen (11, 12) während einer synchronen Verlagerung der Pendelmassen (4) über zumindest einen Teilbereich eines Schwingwinkels (α) der Pendelmassen gegenüber der Drehachse (d) gegeneinander gleiche Abstände (a) aufweisen und an den Lagerstellen (11, 12) die Pendelmassen (4) verbindende Koppelelemente (13) gegenüber den Lagerstellen (11, 12) verdrehbar aufgenommen sind.

## Beschreibung

Die Erfindung betrifft ein Fliehkraftpendel mit einem um eine Drehachse verdrehbaren Trägerteil und an diesem mittels Pendellagern über den Umfang verteilt angeordneten Pendelmassen, wobei die Pendelmassen gegenüber dem Trägerteil mittels der aus jeweils auf Laufbahnen des Trägerteils und der Pendelmassen abwälzenden Pendelrollen gebildeten Pendellager im Fliehkraftfeld des um die Drehachse drehenden Trägerteils um eine Nulllage mit einem vorgegebenen Schwingwinkel pendelfähig und während einer Pendelbewegung um deren Schwerpunkt teilweise verdrehbar aufgehängt sind und wobei die Pendel- und Rotationsbewegung der Pendelmassen durch entsprechende Ausbildung der Laufbahnen vorgegeben ist.

Fliehkraftpendel dienen der drehzahladaptiven Drehschwingungsisolation und werden insbesondere in Antriebssträngen mit einer drehschwingungsbehafteten Brennkraftmaschine eingesetzt. Die Drehschwingungsisolierung erfolgt, indem im Fliehkraftfeld pendelnd an einem Trägerteil aufgehängte Pendelmassen zwischenzeitlich von Drehmomentspitzen eingetragene Energie als potentielle Energie speichern und danach wieder an den Antriebsstrang abgeben. Ein Fliehkraftpendel kann - wie beispielsweise aus der WO2014/082629 A1 bekannt - an einem Einmassenschwungrad, beispielsweise einem aus Blech hergestellten Einmassenschwungrad vorgesehen sein. Wie beispielsweise aus den Druckschriften WO2014/023303 A1 und DE 10 2013 201 981 A1 bekannt, können ein oder mehrere Fliehkraftpendel an einem Drehschwingungsdämpfer, entsprechend der Druckschrift WO2014/114 280 A1 an einer Kupplungsscheibe, entsprechend der Druckschrift EP 2 600 030 A1 an einem hydrodynamischen Drehmomentwandler, an einem Gehäuse einer Reibungskupplung oder an ähnlichen Stellen des Antriebsstrangs vorgesehen sein. Beispielsweise können - wie aus der WO2014/082629 A1 bekannt - axial zwischen zwei Seitenteilen, die das Trägerteil bilden, über den Umfang verteilt Pendelmassen angeordnet sein. Alternativ können an einem als Pendelflansch ausgebildeten Trägerteil beidseitig Pendelmassen angeordnet sein, wobei axial gegenüberliegende Pendelmassen mittels Ausnehmungen des Trägerteils durchgreifender Verbindungsmittel zu einer Pendelmasseneinheit verbunden sind.

Die Pendelbewegung der Pendelmassen beziehungsweise Pendelmasseneinheiten gegenüber dem Trägerteil erfolgt durch Pendellager zwischen den Pendelmassen und dem Trägerteil, wobei die Pendellager durch Pendelrollen gebildet sind, welche auf Laufbahnen von Ausnehmungen in dem Trägerteil und den Pendelmassen abwälzen. Die Form der Laufbahnen ist dabei so ausgelegt, dass die Pendelbahnen der Pendelmassen vorgegeben sind. Beispielsweise können Pendelbahnen von bifilar trapezförmig und exzentrisch zur Drehachse an dem Trägerteil aufgehängten Fadenpendeln abgebildet werden, indem zwei in Umfangsrichtung beabstandete Pendellager zwischen einer Pendelmasse beziehungsweise einer Pendelmasseneinheit und dem Trägerteil vorgesehen sind. Dies führt zu einer möglichen Pendelbewegung über einen vorgegebenen Schwingwinkel, wobei die Pendelmassen jeweils eine Teilrotation um ihren Schwerpunkt ausführen.

Die Pendelmassen und deren Pendelbahnen sind bevorzugt auf eine vorgegebene Schwingungsordnung abgestimmt. Um beispielsweise bei geringen Drehzahlen oder Start- und Stoppvorgängen eine asynchrone Bewegung der Pendelmassen, Geräusche und dergleichen zumindest zu verringern, sind aus der DE 10 2014 210 489 A1 und DE 10 2011 103 471 A1 in Umfangsrichtung wirksame Federelemente zwischen den Pendelmassen angeordnet. Diese üben aufgrund der wirksamen Umfangskräfte zwischen den Pendelmassen einen Einfluss auf die Schwingungsordnung aus und können die tilgende Wirkung des Fliehkraftpendels verringern.

Aufgabe der Erfindung ist die vorteilhafte Weiterbildung eines Fliehkraftpendels. Insbesondere soll die tilgende Wirkung eines Fliehkraftpendels verbessert werden. Insbesondere ist Aufgabe der Erfindung, die Synchronisation der Pendelmassen störungsfrei vorzusehen. Weiterhin ist Aufgabe der Erfindung, das Fliehkraftpendel geräuscharm auszubilden.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Das vorgeschlagene Fliehkraftpendel enthält ein um eine Drehachse, beispielsweise um eine Kurbelwellenachse einer Brennkraftmaschine verdrehbares Trägerteil, das beispielsweise direkt mit der Kurbelwelle oder an einem weiteren, um die Drehachse drehenden Bauteil eines Drehschwingungsdämpfers, einer Reibungskupplung, einer Kupplungsscheibe, eines Drehmomentwandlers oder dergleichen befestigt sein kann. An dem Trägerteil sind mittels Pendellagern über den Umfang verteilt Pendelmassen angeordnet, die beispielsweise aus Blech gestanzt hergestellt sind.

Die Pendelmassen können beidseitig des als Pendelflansch ausgebildeten Trägerteils angeordnet sein, wobei jeweils axial gegenüberliegende Pendelmassen mittels Verbindungsmitteln miteinander zu Pendelmasseneinheiten oder Pendelmassenpaaren verbunden sind. Die Verbindungsmittel durchgreifen hierbei Ausnehmungen des Pendelflanschs. Die Pendellager sind hierbei zwischen den axial gegenüberliegenden Pendelmassen und dem Pendelflansch ausgebildet.

Alternativ können die Pendelmassen axial zwischen zwei Seitenteilen angeordnet sein, die das Trägerteil bilden. Hierbei sind die Pendellager zwischen den Seitenteilen und den Pendelmassen gebildet.

Die Pendellager erlauben eine Verlagerung der Pendelmassen in einer Ebene senkrecht zur Drehachse mit exzentrisch zur Drehachse angeordneten Pendelpunkten. Zur Nachbildung einer bifilaren Aufhängung der Pendelmassen an dem Trägerteil sind bevorzugt zwei in Umfangsrichtung beabstandete Pendellager pro Pendelmasse beziehungsweise Pendelmasseneinheit vorgesehen. Die Pendellager sind jeweils aus einer Pendelrolle gebildet, die auf Laufbahnen des Trägerteils und der Pendelmassen abwälzt. Die Laufbahnen sind beispielsweise an Ausnehmungen der Pendelmassen und des Trägerteiles - Seitenteilen oder Pendelflansch - vorgesehen, wobei die Pendelrollen axial fluchtende Ausnehmungen durchgreifen. Die Pendelmassen werden im Fliehkraftfeld des um die Drehachse drehenden Trägerteils nach radial außen beschleunigt und tilgen Drehschwingungen durch Pendelbewegungen um eine Nulllage. Hierbei ist durch entsprechende Auslegung der Laufbahnen eine Pendelbewegung mit einem vorgegebenen Schwingwinkel vorgegeben. Durch entsprechende Ausbildung der Laufbahnen ist bevorzugt eine Pendelbewegung mit einer Rotationsbewegung der Pendelmassen um ihren Schwerpunkt über zumindest einen Teil des Schwingwinkels vorgesehen.

In dem vorgeschlagenen Fliehkraftpendel sind die Laufbahnen derart ausgebildet, dass an in Umfangsrichtung benachbarten Pendelmassen angeordnete Lagerstellen während einer synchronen Verlagerung der Pendelmassen gegeneinander gleiche Abstände aufweisen und an den Lagerstellen die Pendelmassen verbindende Koppelelemente gegenüber den Lagerstellen verdrehbar aufgenommen sind. Dies bedeutet, dass die Koppelelemente während einer synchronen Verlagerung der Pendelmassen beziehungsweise Pendelmasseneinheiten im Wesentlichen keine Belastungen erfahren. Neigen die Pendelmassen beispielsweise während Start-/Stoppvorgängen, geringer Drehzahl oder stehendem Trägerteil zu asynchronen Bewegungen oder Verlagerungen gegeneinander, stützen die Koppelelemente die Pendelmassen gegeneinander, so dass ein synchroner Bewegungsablauf aufrechterhalten beziehungsweise eine Verlagerung der Pendelmassen gegeneinander in ausreichender Weise vermieden wird.

In einer vorteilhaften Ausführungsform können die Koppelelemente als starre Koppelstangen ausgebildet sein. Alternativ kann zumindest ein Teil der Koppelelemente als in Umfangsrichtung elastische Federelemente, beispielsweise Schraubendruck-, Schraubenzugfedern, Blattfedern oder dergleichen ausgebildet sein. Den Federelementen kann über zumindest einen Teil des Schwingwinkels eine Reibeinrichtung oder eine Dämpfungseinrichtung parallel geschaltet sein.

Die Bewegung der Pendelmassen über den Schwingwinkel erfolgt einem vorgegebenen Verlauf, beispielsweise auf bevorzugt eine Schwingungsordnung oder mehrere Schwingungsordnungen eines Schwingungserregers, beispielsweise der Brennkraftmaschine. Beispielsweise kann die Bewegung der Pendelmassen über den gesamten Schwingwinkel auf eine konstante, vorgegebene Schwingungsordnung abgestimmt sein. Alternativ können die Bewegung der Pendelmassen über den Schwingwinkel auf eine vorgegebene Schwingungsordnung abgestimmt sein und an den Endlagen des Schwingwinkels die Bewegung der Pendelmassen bezogen auf diese Schwingungsordnung verstimmt ausgebildet sein.

Es hat sich als vorteilhaft erwiesen, die Pendelmassen auf eine Schwingungsordnung kleiner gleich zwei abzustimmen.

Zwischen den Koppelelementen und den Lagerstellen kann eine Wälz- oder Gleitlagerung vorgesehen sein.

Es hat sich weiterhin als vorteilhaft erwiesen, ein definiertes Verhältnis zwischen einem Rotationswinkel der Pendelmassen um ihren Schwerpunkt und dem Schwingwinkel der Pendelmassen bezogen auf die Drehachse des Trägerteils vorzusehen. In bevorzugter Weise ist ein Verhältnis eines Rotationswinkels einer Pendelmasse um deren Schwerpunkt zu dem Schwingwinkel dieser Pendelmassen um die Drehachse zwischen Null und eins eingestellt.

Mit anderen Worten kann durch Anpassen der Eigenrotation der Pendelmassen um den eigenen Schwerpunkt im Verhältnis zur Schwingung der Pendelmassen um die Drehachse des Trägerteils beispielsweise entlang deren Schwerpunktsbahn erzielt werden, dass feste Lagerpunkte auf zwei benachbarten Pendelmassen immer denselben Abstand zueinander aufweisen. Gleichzeitig wird die Schwerpunktsbahn der Pendelmasse so angepasst, dass die Schwingordnung des Fliehkraftpendels trotz variabler Eigenrotation der Pendelmassen über den Schwingwinkel konstant bleibt, beziehungsweise einem vorgegebenen Verlauf folgt, beispielsweise einer gezielten Verstimmung der Schwingungsordnung in den Endlagen oder Endbereichen einer Pendelschwingung. Hierdurch wird ermöglicht, ein Koppelelement, beispielsweise Federelemente oder Koppelstangen an diesen festen Lagerpunkten zwischen zwei Pendelmassen anzubringen. Schwingen die Pendelmassen synchron, werden die Koppelemente nicht beansprucht, das heißt ein Einfluss der Koppelelemente auf die Schwingungsordnung unterbleibt. Erst wenn die Pendelmassen beginnen, asynchron zu schwingen, verhindern die Koppelelemente eine dabei eintretende Änderung des Abstands der Lagerpunkte oder dämpfen eine derartige Abstandsänderung elastisch. Dadurch kennzeichnet sich das vorgeschlagene Fliehkraftpendel insbesondere durch
- einen konstanten Abstand benachbarter Pendelmassen an vorgegebenen Lagerpunkten bei synchroner Schwingbewegung der Pendelmassen,
- eine konstante Pendelordnung über Schwingweg oder einem vorgegebenen Ordnungsverlauf folgende Pendelschwingung mit beispielsweise im Bereich der Endlagen des Schwingwinkels gezielter Verstimmung.

Um dies zu erreichen, sind sowohl die Form der Schwerpunktsbahn als auch die Eigenrotation der Pendelmassen um ihren eigenen Schwerpunkt angepasst und aufeinander abgestimmt. Die Eigenrotation im Verhältnis zum Schwingwinkel der Pendelmassen bezüglich des Zentralwinkels der Drehachse ist damit nicht mehr zwangsläufig konstant, sondern kann, um die gestellten Anforderungen zu erfüllen, variabel sein. Der Vorteil in dieser Anordnung besteht darin, dass die Pendelmassen synchron schwingen und eine gegenseitige Beeinflussung der Pendelmassen beziehungsweise eine gegenseitige Behinderung während eines Pendelvorgangs vermieden werden können. Somit ist es möglich, auch bei niedrigen Schwingungsordnungen beziehungsweise bei störenden Einflüssen von außen ein höheres Rückstellmoment zu erreichen, als dies ohne Synchronisation möglich wäre.

Ein weiterer Vorteil einer solchen Anordnung betrifft die Geräuschproblematik bei Start/Stoppvorgängen der Brennkraftmaschine eines Antriebsstrangs beziehungsweise die Beschleunigung von über der Drehachse angeordneten Pendelmassen bei nicht ausreichender Fliehkraft nach radial innen. Durch die Koppelung der Pendelmassen mittels der Koppelelemente ist es nicht mehr möglich, dass einzelne Pendelmassen aufgrund der Schwerkraft herunterfallen beziehungsweise gegeneinander schlagen und somit störende Geräusche verursachen.

Insbesondere bei der Verwendung von Koppelelementen in Form von Federelementen, beispielsweise bei einer Verkürzung des Abstands auf Druck belasteten Federelementen können die Laufbahnen derart ausgebildet sein, dass die Pendelmassen über einen ersten Schwingwinkelbereich um die Nulllage eine synchrone Bewegung ausführen und in zweiten Schwingwinkelbereichen mit betragsmäßig größeren Schwingwinkeln als die Schwingwinkel des ersten Schwingwinkelbereichs der Abstand verkürzt wird und die Koppelelemente unter Energieaufnahme verkürzt werden. Auf diese Weise können beispielsweise Anschläge der Pendelmassen im Endbereich der Schwingwinkel an dem Trägerteil vermieden oder zumindest gedämpft werden, so dass das Fliehkraftpendel vor Beschädigung geschützt wird und Anschlaggeräusche vermieden oder zumindest gedämpft werden. Dies bedeutet, dass ab einem vorgegebenen Übergangswinkel bevorzugt bei großen Schwingwinkeln die Bewegung beziehungsweise die Eigenrotation der Pendelmassen beziehungsweise Pendelmasseneinheiten so ausgelegt ist, dass der Abstand nicht mehr konstant ist sondern kleiner oder größer wird. Dies führt dazu, dass auch die Federkraft der Koppelelemente ab dem Übergangswinkel nicht mehr konstant ist sondern größer wird und dadurch eine Verstimmung der Pendelordnung eintritt. Durch eine steigende Federkraft am Ende des Schwingwinkels beispielsweise vor einem Anschlag und der daraus resultierenden Erhöhung der Schwingordnung wird das Fliehkraftpendel verstimmt und somit der Schwingwinkel im Vergleich zu einem nicht verstimmten Fliehkraftpendel reduziert.

Die Erfindung wird anhand der in den Figuren 1 bis 6 dargestellten Ausführungsbeispiele näher erläutert. Dabei zeigen:
Figur 1 eine schematische Teildarstellung eines Fliehkraftpendels mit starren Koppelelementen,
Figur 2 eine schematische Teildarstellung eines Fliehkraftpendels mit in Umfangsrichtung elastischen Koppelelementen,
Figur 3 das Fliehkraftpendel der Figur 2 mit einer den Koppelementen parallel geschalteten Reibeinrichtung,
Figur 4 das Fliehkraftpendel der Figur 2 mit einer den Koppelementen parallel geschalteten Dämpfungseinrichtung,
Figur 5 ein Diagramm für ein Fliehkraftpendel mit einem bei großen Schwingwinkeln nicht konstanten Abstand der Pendelmassen und
Figur 6 ein Diagramm des Rotationsverhältnisses über den Schwingwinkel.

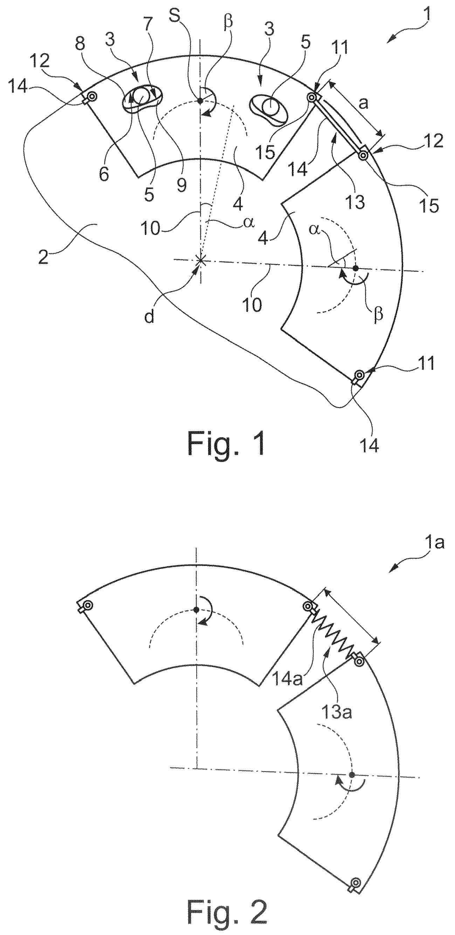

Die Figur 1 zeigt in schematischer Darstellung eine Teilansicht des Fliehkraftpendels 1 mit dem um die Drehachse d verdrehbar angeordneten Trägerteil 2 und dem über den Umfang verteilt mittels an sich bekannten Pendellagern 3 pendelfähig aufgehängten Pendelmassen 4. Die Pendellager 3 enthalten Pendelrollen 5, die auf Laufbahnen 6, 7 von Ausnehmungen 8, 9 der Pendelmassen 4 und dem Trägerteil 2 unter Fliehkrafteinwirkung nach radial außen abgestützt sind. Die Laufbahnen 6, 7 sind so geformt, dass die Pendelmassen 4 über einen vorgegebenen Schwingwinkel ±α einer Pendelmasse 4 um den Schwerpunkt S gegenüber der Nulllage 10 zugleich um den Schwerpunkt S über den Schwingwinkel ±α pendeln und um den Rotationswinkel ±β rotieren. Dabei sind die Laufbahnen 6, 7 desweiteren so ausgebildet, dass an den Lagerstellen 11, 12 zweier benachbarter Pendelmassen 4 der Abstand a während synchronen Pendel- und Rotationsbewegungen der Pendelmassen 4 gleich bleibt.

Die Pendelmassen 4 sind an den Lagerstellen 11, 12 jeweils mittels eines Koppelelements 13 verbunden, welches in dem gezeigten Ausführungsbeispiel als starre Koppelstange 14 ausgebildet ist. In weiteren Ausführungsbeispielen können weitere Arten von starren Koppelelementen vorgesehen sein.

Zur verdrehbaren Lagerung der Koppelstange 14 an den Lagerstellen 11, 12 sind die Wälzlager 15 vorgesehen. Alternativ können Gleitlager oder weitere Formen von Gelenken zwischen Pendelmasse 4 und Koppelstange 14 vorgesehen sein. In dem gezeigten Ausführungsbeispiel sind die Lagerstellen 11, 12 an den einander zugewandten Endbereichen der Pendelmassen 4 vorgesehen. Diese können frei gewählt und auch an anderen Stellen der Pendelmassen 4 vorgesehen sein. In der dargestellten Ausführungsform sind die beiden Lagerstellen 11, 12 in den Pendelmassen 4 spiegelsymmetrisch zueinander angeordnet, prinzipiell sind jedoch auch andere Anordnungen denkbar.

Für den Rotationswinkel β der Pendelmassen 4 zu deren Schwingwinkel α um die Drehachse d des Trägerteils 2 wird ein Verhältnis zwischen Null und Eins vorgeschlagen. Größere Verhältnisse können auch vorgesehen sein.

Die vorgeschlagene Form der Kopplung zweier Pendelmassen 4 eignet sich für sämtliche Anwendungen, bei denen zwei oder mehrere Pendelmassen 4 an einem Trägerteil 2 pendelfähig aufgehängt sind. Besonders vorteilhaft ist diese jedoch bei Anwendungen, bei denen die Schwingungsordnung kleiner oder gleich Schwingungsordnung zwei ist. Hierbei ist über den gesamten Schwingwinkelbereich des Schwingwinkels α der Pendelmassen um die Nulllage eine konstante Schwingungsordnung eingestellt, so dass die starren Koppelstangen 14 nur bei asynchronem Verhalten der Pendelmassen 4 belastet werden, während bei synchronem Verhalten die Koppelstangen 14 die Pendelmassen 4 allenfalls durch die Lagerreibung an den Lagerstellen 11, 12 belasten.

Im Unterschied zu dem Fliehkraftpendel 1 der Figur 1 ist das ansonsten diesem ähnliche und in derselben Darstellung dargestellte Fliehkraftpendel 1a der Figur 2 mit Koppelelementen 13a versehen, die in Umfangsrichtung elastisch ausgebildet sind. Die Koppelelemente 13a sind hier als Federelemente 14a in Form von Schraubenfedern - Schraubenzug- oder Schraubendruckfedern - vorgesehen. Die Federelemente 14a können eine lineare, degressive oder progressive Kennlinie aufweisen. Durch die elastische Ausbildung der Koppelelemente 13a können die Laufbahnen der Pendelmassen derart ausgestaltet werden, dass insbesondere bei großen Schwingwinkeln α Abweichungen von dem konstanten Abstand a vorgesehen sein können, die zu einer Komprimierung der Federelemente 14a führen, so dass Anschläge der Pendelmassen 4 an dem Trägerteil 2 (Figur 1) vermieden werden können. Hierbei wird innerhalb eines Schwingwinkelbereichs mit vorgegebenen Schwingwinkeln α um die Nulllage 10 bis zu einem Übergangswinkel eine Schwingung bei konstanter Schwingungsordnung eingestellt. Bei den nahe an den Anschlägen bei maximalen Schwingwinkeln liegenden Schwingwinkelbereichen wird diese Schwingungsordnung erhöht, so dass sich zwischen den in Umfangsrichtung benachbarten Pendelmassen 4 eine durch den abfallenden Abstand a ansteigende Federkraft einstellt. Hierdurch wird bei gleicher auf die Pendelmassen 4 wirkender Kraft der Schwingwinkel α verkürzt, so dass in demselben Bauraum Pendelmassen 4 mit größerer Masse und damit größerer Tilgung eingesetzt werden können.

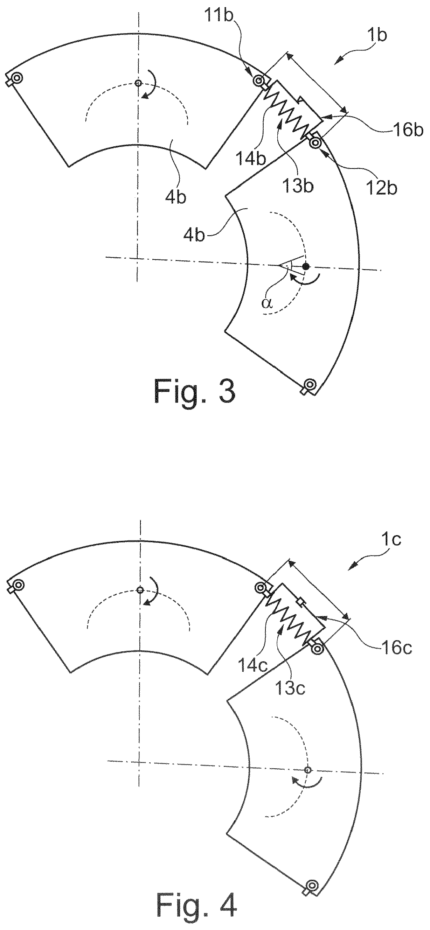

Im Unterschied zu dem Fliehkraftpendel 1a der Figur 2 ist das Fliehkraftpendel 1b der Figur 3 mit dem Koppelelement 13b versehen, welches aus dem Federelement 14b und der parallel zu dieser zwischen den beiden Lagerstellen 11 b, 12b geschalteten Reibeinrichtung 16b gebildet ist. Die Reibeinrichtung 16b kann über den gesamten Schwingwinkel ±α der Pendelmassen 4b oder nur über einen Teil des Schwingwinkels ±α wirksam geschaltet sein. Bevorzugt wird das Federelement 14b mit leichter Vorspannung zwischen den benachbarten Pendelmassen 4 verbaut.

Im Unterschied zu dem Fliehkraftpendel 1b der Figur 3 ist das Fliehkraftpendel 1c der Figur 4 mit dem Koppelement 13c versehen, bei dem anstatt einer Reibeinrichtung die Dämpfungseinrichtung 16c parallel zu dem Federelement 14c geschaltet ist. Die Dämpfungseinrichtung 16c kann aus einem pneumatisch oder hydraulisch auf Druck oder Zug belasteten Druckzylinder gebildet sein.

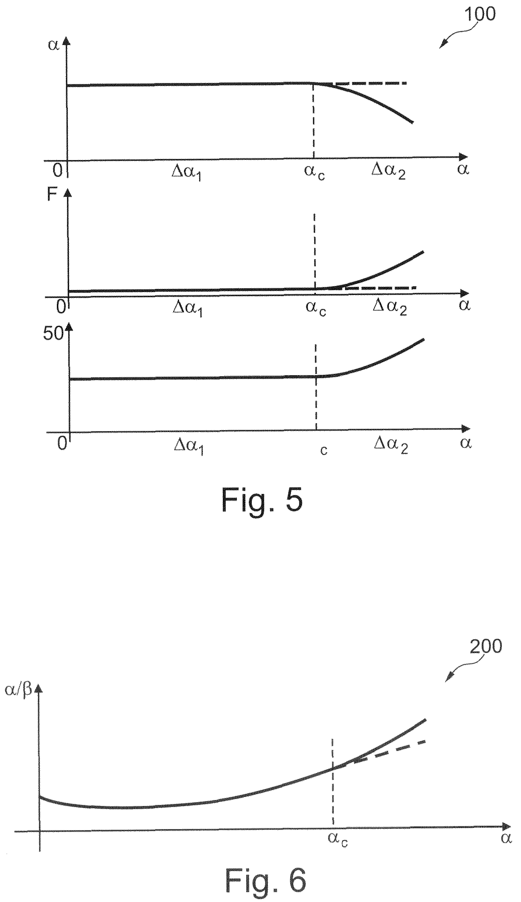

Die Figur 5 zeigt unter Bezug auf das Fliehkraftpendel 1a der Figur 2 das mehrteilige Diagramm 100 des Abstands a, die zwischen den benachbarten Pendelmassen 4 durch das Koppelelement 13a ausgebildete Federkraft F und die Schwingungsordnung SO über den Schwingwinkel α. An dem Fliehkraftpendel 1a ist ausgehend von der Nulllage 0 und dem Übergangswinkel α_{c} der erste Schwingwinkelbereich Δα₁ eingestellt, bei dem die Laufbahnen der Pendellager einen konstanten Abstand a mit sich dadurch konstanter Federkraft F und konstanter Schwingungsordnung SO über den Schwingwinkel α vorgeben. Bei Schwingwinkeln α größer als dem Übergangswinkel α_{c} ist bis zum Erreichen des Anschlags der Pendelmassen an dem Trägerteil ein zweiter Schwingwinkelbereich Δα₂ durch die Laufbahnen eingestellt, bei dem sich der Abstand a mit zunehmendem Schwingwinkel α verringert. Hierdurch erhöhen sich die zwischen den Pendelmassen wirkende Federkraft F und die Schwingungsordnung SO entsprechend, so dass sich in dem zweiten Schwingwinkelbereich Δα₁ bei durch Drehschwingungen ausgelenkten Pendeln der Schwingwinkel α mit zunehmender eingetragener Energie verringert und damit Anschläge der Pendelmassen an dem Trägerteil vermieden oder vermindert werden können.

Die Figur 6 zeigt das Diagramm 200, welches das Verhältnis β/a des Schwingwinkels α und des Rotationswinkels β gegenüber dem Schwingwinkel α eines Fliehkraftpendels entsprechend Figur 5 zeigt. Hierbei wird durch die Ausbildung der Laufbahnen der Pendellager bei größeren Schwingwinkeln als dem Übergangswinkel α_{c} das Verhältnis β/a gegenüber dem in dem gestrichelten Verlauf angegebenen Verhältnis β/a bei über den gesamten Schwingwinkel α konstantem Abstand a (Figur 2) angehoben. Hierdurch erfolgt ein gegenüber dem Schwingwinkel α erhöhter Rotationswinkel β bei verringerten Abständen a. Hierdurch lassen sich sowohl eine synchrone Führung der Pendelmassen bis zum Übergangswinkel α_{c} und ein Anschlagschutz beziehungsweise eine Begrenzung des maximalen Schwingwinkels α erzielen.

### Bezugszeichenliste

- 1: Fliehkraftpendel
- 1a: Fliehkraftpendel
- 1b: Fliehkraftpendel
- 1c: Fliehkraftpendel
- 2: Trägerteil
- 3: Pendellager
- 4: Pendelmasse
- 4b: Pendelmasse
- 5: Pendelrolle
- 6: Laufbahn
- 7: Laufbahn
- 8: Ausnehmung
- 9: Ausnehmung
- 10: Nulllage
- 11: Lagerstelle
- 11b: Lagerstelle
- 12: Lagerstelle
- 12b: Lagerstelle
- 13: Koppelelement
- 13a: Koppelelement
- 13b: Koppelelement
- 13c: Koppelelement
- 14: Koppelstange
- 14a: Federelement
- 14b: Federelement
- 14c: Federelement
- 15: Wälzlager
- 16b: Reibeinrichtung
- 16c: Dämpfungseinrichtung
- 100: Diagramm
- 200: Diagramm
- a: Abstand
- d: Drehachse
- F: Federkraft
- S: Schwerpunkt
- SO: Schwingungsordnung
- α: Schwingwinkel
- α_{c}: Übergangswinkel β Rotationswinkel
- Δα₁: Schwingwinkelbereich
- Δα₂: Schwingwinkelbereich

## Patentansprüche

1. Fliehkraftpendel (1, 1a, 1 b, 1 c) mit einem um eine Drehachse (d) verdrehbaren Trägerteil (2) und an diesem mittels Pendellagern (3) über den Umfang verteilt angeordneten Pendelmassen (4, 4b), wobei die Pendelmassen (4, 4b) gegenüber dem Trägerteil (2) mittels der aus jeweils auf Laufbahnen (6, 7) des Trägerteils (2) und der Pendelmassen (4, 4b) abwälzenden Pendelrollen (5) gebildeten Pendellager (3) im Fliehkraftfeld des um die Drehachse (d) drehenden Trägerteils (2) um eine Nulllage (10) mit einem vorgegebenen Schwingwinkel (α) pendelfähig und während einer Pendelbewegung um deren Schwerpunkt (S) teilweise verdrehbar aufgehängt sind und wobei die Pendel- und Rotationsbewegung der Pendelmassen (4, 4b) durch entsprechende Ausbildung der Laufbahnen (6, 7) vorgegeben ist, **dadurch gekennzeichnet, dass** die Laufbahnen (6, 7) derart ausgebildet sind, dass an in Umfangsrichtung benachbarten Pendelmassen (4, 4b) angeordnete Lagerstellen (11, 11 b, 12, 12b) während einer synchronen Verlagerung der Pendelmassen (4, 4b) über zumindest einen Teilbereich eines Schwingwinkels (α) der Pendelmassen gegenüber der Drehachse (d) gegeneinander gleiche Abstände (a) aufweisen und an den Lagerstellen (11, 11b, 12, 12b) die Pendelmassen (4, 4b) verbindende Koppelelemente (13, 13a, 13b, 13c) gegenüber den Lagerstellen (11, 11 b, 12, 12b) verdrehbar aufgenommen sind.

2. Fliehkraftpendel (1) nach Anspruch 1, **dadurch gekennzeichnet, dass** die Koppelelemente (13) als starre Koppelstangen (14) ausgebildet sind.

3. Fliehkraftpendel (1a, 1b, 1c) nach Anspruch 1, **dadurch gekennzeichnet, dass** die Koppelelemente (13a, 13b, 13c) in Umfangsrichtung elastische Federelemente (14a, 14b, 14c) enthalten.

4. Fliehkraftpendel (1b, 1c) nach Anspruch 2, dass den Federelementen (14b, 14c) über zumindest einen Teil des Schwingwinkels (α) eine Reibeinrichtung (16b) oder eine Dämpfungseinrichtung (16c) parallel geschaltet ist.

5. Fliehkraftpendel (1, 1 a, 1 b, 1 c) nach einem der Ansprüche 1 bis 4, **dadurch gekennzeichnet, dass** die Bewegung der Pendelmassen (4, 4b) über den Schwingwinkel (α) nach einem vorgegebenen Verlauf erfolgt.

6. Fliehkraftpendel (1, 1a, 1 b, 1 c) nach Anspruch 5, **dadurch gekennzeichnet, dass** die Bewegung der Pendelmassen (4, 4b) über den gesamten Schwingwinkel (α) auf eine konstante, vorgegebene Schwingungsordnung abgestimmt ist.

7. Fliehkraftpendel (1, 1a, 1 b, 1 c) nach Anspruch 5, **dadurch gekennzeichnet, dass** die Bewegung der Pendelmassen (4, 4b) in einem ersten Schwingwinkelbereich (Δα₁) um die Nulllage (10) auf eine vorgegebene Schwingungsordnung abgestimmt ist und in einem sich an diesen anschließenden zweiten Schwingwinkelbereich (Δα₂) eine Bewegung der Pendelmassen (4, 4b) bezogen auf diese Schwingungsordnung verstimmt ausgebildet ist.

8. Fliehkraftpendel (1, 1 a, 1 b, 1 c) nach einem der Ansprüche 1 bis 7, **dadurch gekennzeichnet, dass** die Pendelmassen (4, 4b) auf eine Schwingungsordnung kleiner gleich zwei abgestimmt sind.

9. Fliehkraftpendel (1, 1 a, 1 b, 1 c) nach einem der Ansprüche 1 bis 8, **dadurch gekennzeichnet, dass** zwischen den Koppelelementen (13, 13a, 13b, 13c) und den Lagerstellen (11, 11 b, 12, 12b) eine Wälz- oder Gleitlagerung vorgesehen ist.

10. Fliehkraftpendel (1, 1 a, 1 b, 1 c) nach einem der Ansprüche 1 bis 9, **dadurch gekennzeichnet, dass** ein Verhältnis eines Rotationswinkels (β) einer Pendelmasse (4, 4b) um deren Schwerpunkt (S) zu dem Schwingwinkel (α) dieser Pendelmasse (4, 4b) zwischen Null und eins eingestellt ist.
